**Europäisches Patentamt**

**European Patent Office**

**Office européen des brevets**

(11) Veröffentlichungsnummer: **0 356 693**
**A2**

(12) **EUROPÄISCHE PATENTANMELDUNG**

(21) Anmeldenummer: 89113419.9

(22) Anmeldetag: 21.07.89

(51) Int. Cl.⁵: **B01D 53/34** , **C01B 17/00**

(30) Priorität: 03.08.88 DE 3826372

(43) Veröffentlichungstag der Anmeldung:
07.03.90 Patentblatt 90/10

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Lailach, Günter, Dr.**
**Bismarckstrasse 109**
**D-4150 Krefeld(DE)**
Erfinder: **Gerken, Rudolf, Dr.**
**Rather Strasse 79**
**D-4150 Krefeld-Traar(DE)**

(54) Verfahren zur Herstellung von Schwefelsäure sowie Vorrichtung zur Durchführung dieses Verfahren.

(57) Die vorliegende Erfindung betrifft ein Verfahren zur Entschwefelung $SO_2$-haltiger Gasströme unter Bildung von Schwefelsäure durch Reaktion des $SO_2$ mit Sauerstoff und Wasser an feuchter Aktivkohle bei Temperaturen von 40 bis 90 °C sowie eine Vorrichtung zur Durchführung dieses Verfahrens.

EP 0 356 693 A2

## Verfahren zur Herstellung von Schwefelsäure sowie Vorrichtung zur Durchführung dieses Verfahrens

Die vorliegende Erfindung betrifft ein Verfahren zur Entschwefelung $SO_2$-haltiger Gasströme unter Bildung von Schwefelsäure durch Reaktion des $SO_2$ mit Sauerstoff und Wasser an feuchter Aktivkohle bei Temperaturen von 40 bis 90° C sowie eine Vorrichtung zur Durchführung dieses Verfahrens.

Aus der DE-C 854 205 ist es bekannt, Schwefeldioxid mit Wasser und Sauerstoff an feuchter Aktivkohle zu Schwefelsäure umzusetzen. Zur technischen Anwendung kam dieses Verfahren unter dem Namen "Sulfacid-Verfahren" (Sulfur No. 117, March/April 1975, 32 - 38). Einer breiten Anwendung des Verfahrens standen - außer der Tatsache, daß die gebildete Schwefelsäure nur eine Konzentration von maximal 20 Gew.-% hat - die relativ hohen Apparate- und Energiekosten entgegen. Versuche, einen besseren spezifischen $SO_2$-Umsatz zu erreichen, führten zu komplizierteren Apparaten (US-A 3 907 970). Aus der EP-A 177 806 geht hervor, daß die $SO_2$-Umsetzung an feuchter Aktivkohle beispielsweise für die Rauchgasentschwefelung wirtschaftlich sein kann, wenn die Rohgaswärme zur Konzentrierung der gebildeten Schwefelsäure auf 60 bis 85 Gew.-% genutzt wird. Ein Nachteil dieses Verfahrens ist jedoch der relativ große apparative Aufwand, der dadurch bedingt ist, daß die in der vom $SO_2$-haltigen Gas durchströmten Aktivkohleschicht gebildete Schwefelsäure durch Besprühen der Aktivkohle mit Wasser ausgewaschen werden muß.

Ziel dieser Erfindung ist eine Verbesserung der Wirtschaftlichkeit des Verfahrens durch apparative Vereinfachung, die insbesondere bei der Entschwefelung großer Gasströme, wie bei der Rauchgasentschwefelung, von wesentlicher Bedeutung ist.

Es wurde nun gefunden, daß dieses Ziel dadurch erreicht wird, daß in den $SO_2$-enthaltenden Gasstrom so viel Wasser eingedüst wird, daß aus der von diesem Gas durchströmten Aktivkohleschicht Schwefelsäure mit einer Konzentration von maximal 20 Gew.-% abfließt.

Gegenstand dieser Erfindung ist somit ein Verfahren zur Entschwefelung $SO_2$-haltiger Gasströme unter Bildung von Schwefelsäure durch Reaktion des $SO_2$ mit Sauerstoff und Wasser an feuchter Aktivkohle bei Temperaturen von 40 bis 90° C, wobei in den $SO_2$-haltigen Gasstrom, der eine Wasserdampfsättigung von mindestens 90 % hat, 7 bis 100 g $H_2O$ pro 1 g $SO_2$, das im Gasstrom enthalten ist, verdüst werden.

Vorteilhaft soll der Gasstrom vor dem Eintritt in die Aktivkohleschicht 7 bis 50 g $H_2O$ pro g $SO_2$ in Form feiner Tröpfchen enthalten. Dabei erfolgt die Verdüsung der Flüssigkeit mit Zerstäubungsdüsen in den Gasstrom vor dessen Einleitung in den die Aktivkohleschicht enthaltenden Reaktor oder unmittelbar im Eintrittsbereich des Reaktors in einer solchen Weise, daß der Gasstrom vor dem Auftreffen auf die Aktivkohleschicht die Flüssigkeitstropfen möglichst gleichmäßig verteilt enthält.

Eine bevorzugte Ausführungsform des erfindungsgemäßen Verfahrens besteht somit darin, daß die Verdüsung des Wassers in den Gasstrom vor dem Eintritt oder unmittelbar beim Eintritt in den die Aktivkohle enthaltenden Reaktor erfolgt.

Das Zerstäuben der Flüssigkeit kann vorteilhaft mit Einstoffdüsen oder Zweistoffdüsen erfolgen. Bei der Verwendung von Zweistoffdüsen dienen komprimierte Luft oder komprimierter Wasserdampf als bevorzugt Treibmittel. Anstelle von Wasser kann auch verdünnte Schwefelsäure verdüst werden.

Der Vorteil des erfindungsgemäßen Verfahrens liegt vor allem darin, daß eine bessere Ausnutzung des Reaktorvolumens möglich ist als nach den bekannten Verfahren, weil über der Aktivkohleschicht kein großer Freiraum für die Anordnung eines Bedüsungssystems mit dem durch die Düsencharakteristik bedingten relativ großen Abstand der Düsen vor der Aktivkohleschicht erforderlich ist.

Gegenstand dieser Erfindung ist auch eine Vorrichtung zur Durchführung des erfindungsgemäßen Verfahrens. Diese Vorrichtung ist dadurch gekennzeichnet, daß ein aufrechtstehender Reaktor mit kreisförmiger oder rechteckiger Grundfläche durch Zwischenböden in mehrere übereinanderliegende Kammern unterteilt ist, in denen Aktivkohle auf gasdurchlässigen Rosten als ruhende Schicht angeordnet ist, wobei sich in der Reaktorwand über den Aktivkohleschichten Öffnungen für die Einleitung des das verdüste Wasser tropfenförmig enthaltenden schwefeldioxidhaltigen Gases befinden und unter den Aktivkohleschichten Öffnungen für die Ableitung des entschwefelten Gases und der verdünnten Schwefelsäure.

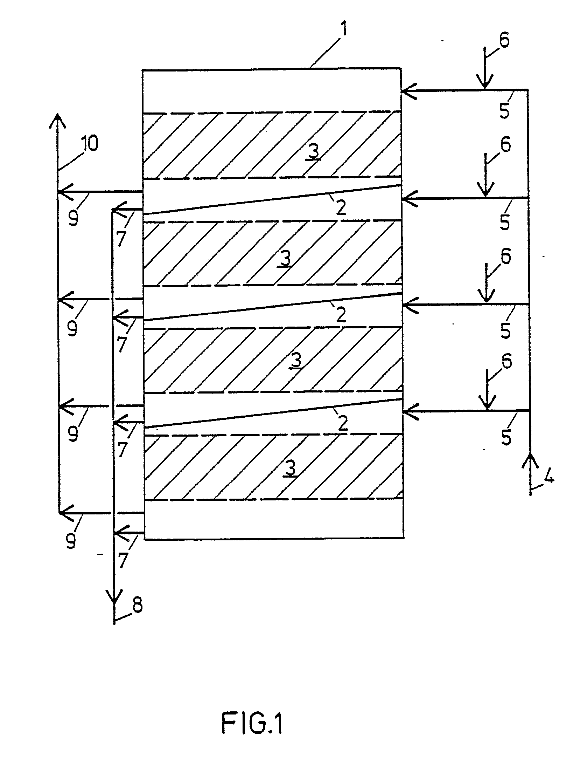

Eine Ausführungsform des erfindungsgemäßen Reaktors ist in Fig. 1 schematisch dargestellt. Dieser Reaktor (1) besteht aus einem stehenden Gehäuse mit rechteckigem oder zylindrischem Querschnitt, in dem vorzugsweise nach einer Seite geneigte Zwischenböden (2) angeordnet sind. In jeder durch die Zwischenböden (2) und die untere und obere Außenwand des Reaktors (1) gebildeten Kammer befindet sich auf einem gasdurchlässigen Rost eine Schicht Aktivkohle (3). Der schwefeldioxidhaltige Gasstrom (4) wird in Teilströme (5) aufgeteilt, die in die einzelnen Reaktorkammern in die Räume über den Aktivkohleschichten eingeleitet werden. Vor der Einleitung in die Reaktorkammern wird das für den Prozeß benötigte Wasser in das Gas zerstäubt (6), vorzugsweise in die einzelnen Teilströme. Beim Durchströmen der Aktivkohleschichten (3) wird das Schwefeldioxid mit Sauerstoff und Wasser zu Schwefelsäure umgesetzt, die als verdünnte Säure aus den Aktivkohleschichten abtropft und über den darunterliegenden Boden abfließt (7) und gesammelt wird (8). Die aus den Reaktorkammern austretenden Teilströme (9) des entschwefelten Gases (10) können zum Kamin abgeleitet werden.

Die Zahl der Kammern und damit der Aktivkohleschichten ist beliebig und nur durch die konstruktiven Möglichkeiten begrenzt. Vorteilhaft ist die kompakte Bauweise, die nur möglich ist, weil durch die Anwendung erfindungsgemäßen Flüssigkeitsverteilung über den Aktivkohleschichten durch Zerstäuben in den Gasstrom die herkömmlichen Verteilungs- und Bedüsungssysteme mit ihrem hohen Raumbedarf nicht mehr benötigt werden.

Eine bevorzugte Ausführungsform der erfindungsgemäßen Vorrichtung besteht darin, daß für die Ableitung des entschwefelten Gases und der verdünnten Schwefelsäure aus jeder Reaktorkammer eine oder mehrere gemeinsame Öffnungen vorgesehen sind.

Weiterhin kann es vorteilhaft sein, daß jede Reaktorkammer eine oder mehrere Öffnungen für die Ableitung des entschwefelten Gases und eine oder mehrere Öffnungen für die Ableitung der verdünnten Schwefelsäure aufweist.

Eine besonders bevorzugte Ausführungsform der erfindungsgemäßen Vorrichtung besteht darin, daß die Zwischenböden des Reaktors geneigt sind und die Gaseinleitungsöffnungen im Bereich der höchsten Stelle unter den Böden, die Gasableitungsöffnungen und Schwefelsäureableitungsöffnungen im Bereich der tiefsten Stelle über den Böden angeordnet sind.

## Ansprüche

1. Verfahren zur Entschwefelung $SO_2$-haltiger Gasströme unter Bildung von Schwefelsäure durch Reaktion des $SO_2$ mit Sauerstoff und Wasser an feuchter Aktivkohle bei Temperaturen von 40 bis 90°C, dadurch gekennzeichnet, daß in den $SO_2$-haltigen Gasstrom, der eine Wasserdampfsättigung von mindestens 90 % hat, 7 bis 100 g $H_2O$ pro 1 g $SO_2$, das im Gasstrom enthalten ist, verdüst werden.

2. Verfahren gemäß Anspruch 1, dadurch gekennzeichnet, daß die Verdüsung des Wassers in den Gasstrom vor dem Eintritt oder unmittelbar beim Eintritt in den die Aktivkohle enthaltenden Reaktor erfolgt.

3. Verfahren gemäß einem der Ansprüche 1 oder 2, dadurch gekennzeichnet, daß die Verdüsung des Wassers mittels Einstoffdüsen erfolgt.

4. Verfahren gemäß einem der Ansprüche 1 oder 2, dadurch gekennzeichnet, daß die Verdüsung des Wassers mitels Zweistoffdüsen erfolgt.

5. Verfahren gemäß Anspruch 4, dadurch gekennzeichnet, daß die Verdüsung mittels komprimierter Luft und/oder komprimiertem Wasserdampf erfolgt.

6. Vorrichtung zur Durchführung des Verfahrens gemäß einem oder mehrerer der Ansprüche 1 bis 5, dadurch gekennzeichnet, daß ein aufrechtstehender Reaktor mit kreisförmiger oder rechteckiger Grundfläche durch Zwischenböden in mehrere übereinanderliegende Kammern unterteilt ist, in denen Aktivkohle auf gasdurchlässigen Rosten als ruhende Schicht angeordnet ist, wobei sich in der Reaktorwand über den Aktivkohleschichten Öffnungen für die Einleitung des das verdüste Wasser tropfenförmige enthaltenden schwefeldioxidhaltigen Gases befinden und unter den Aktivkohleschichten Öffnungen für die Ableitung des entschwefelten Gases und der verdünnten Schwefelsäure.

7. Vorrichtung gemäß Anspruch 6, dadurch gekennzeichnet, daß für die Ableitung des entschwefelten Gases und der verdünnten Schwefelsäure aus jeder Reaktorkammer eine oder mehrere gemeinsame Öffnungen vorgesehen sind.

8. Vorrichtung gemäß Anspruch 6, dadurch gekennzeichnet, daß jede Reaktorkammer eine oder mehrere Öffnungen für die Ableitung des entschwefelten Gases und eine oder mehrere Öffnungen für die Ableitung der verdünnten Schwefelsäure aufweist.

9. Vorrichtung gemäß einem oder mehrerer der Ansprüche 6 bis 8, dadurch gekennzeichnet, daß die Zwischenböden des Reaktors geneigt sind und die Gaseinleitungsöffnungen im Bereich der höchsten Stelle unter den Böden, die Gasableitungsöffnungen und Schwefelsäureableitungsöffnungen im Bereich der tiefsten Stelle über den Böden angeordnet sind.

FIG.1